Europäisches Patentamt

European Patent Office

Office européen des brevets

(19)

(11) **EP 1 575 107 A2**

(12) ## EUROPEAN PATENT APPLICATION

(43) Date of publication:
**14.09.2005   Bulletin 2005/37**

(51) Int Cl.⁷: **H01M 8/00**, H01M 8/04,
H01M 8/02

(21) Application number: **05013023.6**

(22) Date of filing: **31.10.2003**

(84) Designated Contracting States:
**DE FR GB**

(30) Priority: **30.04.2003  US 428296**

(62) Document number(s) of the earlier application(s) in
accordance with Art. 76 EPC:
**03024895.9 / 1 480 284**

(71) Applicant: **Hewlett-Packard Development
Company, L.P.
Houston, TX 77070 (US)**

(72) Inventors:
• **Mardilovich, Peter
Corvallis OR 97330 (US)**
• **Herman, Gregory S.
Albany OR 97321 (US)**

• **Champion, David
Lebanon OR 97355 (US)**
• **Thirukkovalur, Niranjan
Corvallis OR 97330 (US)**
• **O' Neil, James
Corvallis OR 97330 (US)**

(74) Representative: **Schoppe, Fritz et al
Schoppe, Zimmermann, Stöckeler & Zinkler
Patentanwälte
Postfach 246
82043 Pullach bei München (DE)**

Remarks:
This application was filed on 16 - 06 - 2005 as a
divisional application to the application mentioned
under INID code 62.

(54) **Fuel cell assembly and method for controlling reaction equilibrium**

(57)     In accordance with various embodiments of the invention, a fuel cell assembly (100) may comprise a flow passageway (130) having a region of graduated cross sectional area along the flow passageway (130) for maintaining a reaction equilibrium. The region may be defined be the arrangement of stacked fuel cell elements (110) alone or in combination with additional shaped spacers (160). The spacers are provided with a textured surface which may simply be irregular or may have some type of designed grooves or ridges. This irregular surface produces turbulences in the reactant flow increasing the probability of the reactant gas stream interacting with the electrode material.

Figure 1

EP 1 575 107 A2

## Description

### BACKGROUND

Field of the Invention

The present invention generally relates to fuel cells.

Background Information

Fuel cell technology is of particular commercial interest. Ongoing research and development continues to further the scope of potential uses of this technology. Fuel cell efficiency is one area of research that has a substantial amount of potential for advancement. Fuel cells use chemical reactions to convert fuels and oxidizers to products and/or by-products and electricity. The efficiency of a fuel cell then is linked to the numerous factors associated with the reactant contact-time and pressure at an electrocatalyst, optimizing the reaction equilibrium and creating conditions that favor the complete conversion to reaction products and/or by-products.

One factor related to fuel cell efficiency may be how well the fuel is utilized by the fuel cell. The fuel utilization may depend upon shifts in the reaction equilibrium. If the reaction equilibrium shifts toward the reactants, the fuel may be under utilized, *i.e.*, less fuel may be converted to products. Shifts in the reaction equilibrium may depend upon the apparatus and/or the operating conditions of the fuel cell. Alterations in the apparatus and/or operating conditions may prevent undesirable shifts in the reaction equilibrium. Furthermore, the space velocity of fuel and oxidizer control factors, *e.g.,* electrocatalyst contact time, reactant pressure, strongly influence the conversion efficiency and fuel utilization of the fuel cell system. The subject matter described below addresses one or more of these issues.

### BRIEF SUMMARY

In accordance with various embodiments of the invention, a fuel cell assembly may comprise one or more fuel cell elements and one or more flow passageways in contact with fuel cell elements wherein at least a portion of the cross sectional area of a flow passageway is graduated.

In accordance with various embodiments of the invention, a fuel cell assembly may comprise flow passageways that have a region of graduated cross sectional area for maintaining or shifting the reaction equilibrium. The regions may be defined by the arrangement of stacked fuel cell elements alone or in combination with additional shaped spacers.

### BRIEF DESCRIPTION OF THE DRAWINGS

For a detailed description of the embodiments of the invention, reference will now be made to the accompanying drawings in which:

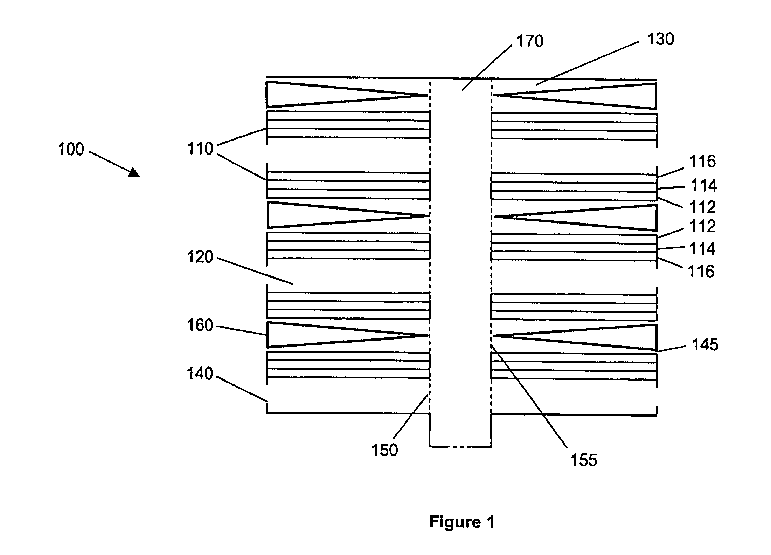

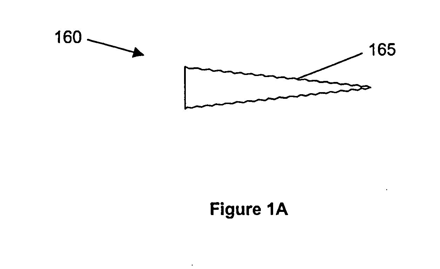

Figure 1 shows a fuel cell assembly using spacers in the cathode passageways in accordance with the various embodiments of the invention;
Figure 1 a shows a fuel cell spacer having a textured surface;
Figure 2 shows a fuel cell assembly using spacers in the anode passageways in accordance with the various embodiments of the invention;
Figure 3 shows a fuel cell assembly without spacers in accordance with the various embodiments of the invention; and
Figure 4 shows a fuel cell assembly using spacers in the anode and cathode passageways in accordance with the various embodiments of the invention.

### NOTATION AND NOMENCLATURE

Certain terms are used throughout the following description and claims to refer to particular system components. As one skilled in the art will appreciate, individuals and companies may refer to a component by different names. This document does not intend to distinguish between components that differ in name but not function. The terms used herein are intended to have their customary and ordinary meaning. The disclosure should not be interpreted as disclaiming any portion of a term's ordinary meaning. Rather, certain terms are intended to have additional scope, such as the term "graduated," which is intended to have a broader meaning of increasing or decreasing over a given region in addition to its customary and ordinary meaning.

### DETAILED DESCRIPTION

The following discussion is directed to various embodiments of the invention. Although one or more of these embodiments may be preferred, the embodiments disclosed should not be interpreted, or otherwise used, as limiting the scope of the disclosure, including the claims, unless otherwise specified. In addition, one skilled in the art will understand that the following description has broad application, and the discussion of any embodiment is meant only to be exemplary of that embodiment, and not intended to intimate that the scope of the disclosure, including the claims, is limited to that embodiment.

Embodiments of the invention may include a fuel cell assembly comprising one or more fuel cell elements and one or more flow passageways in contact with fuel cell elements wherein at least a portion of the cross sectional area of a flow passageway is graduated. A flow passageway is graduated in order to change the cross sectional area along the flow passageway. It will be understood that a change in the cross sectional area may correspond to a change in volume along the passageway. The change in volume along the passageway may affect the velocity of the flowing gas stream, which may affect the pressure at the side walls within the passageway (*i.e.*, the pressure of the reactant species at the electrocatalyst). It is believed that this relationship can be explained by the Bernoulli equation provided below:

$$P + 0.5pv^2 + \rho gh = \text{constant}$$

Where P is the pressure, $\rho$ is the density, $v$ is the velodty, $h$ is the elevation, and $g$ is the gravitational acceleration. Thus, if the volume is decreased there may be an increase in the velodty of the flowing gas resulting in lower pressures at the side walls within the passageway. Altematively, if the volume is increased there may be a decrease in the velocity of the flowing gas resulting in higher pressures at the side walls within the passageway.

It will be understood and appreciated by those skilled in the art that a change in pressure on either the reactant or product side of a reaction can have an affect on the reaction equilibrium. Depending on the stoichiometry of the reaction and the phase of the components (reactants/products) increased pressure on the reactant side or decreased pressure on the product side may shift the reaction equilibrium toward products or toward reactants. Accordingly, for a given set of operating conditions, increasing or decreasing the volume in the passageway may help maintain a reaction equilibrium and/ or shift the reaction towards products. Furthermore, controlling the velocity of the reactant species allows optimization of the electrocatalyst contact time and the reactant pressure which can increase the electrochemical reaction kinetics.

For example, the relevant reaction at the cathode side of a fuel cell is diatomic molecular oxygen converting to ionic oxygen. The relevant pressures involved are the pressures of oxygen on both sides of the equation. In order to favor products a greater pressure may be necessary on the reactant side of the equation. As the oxygen reactant gas stream moves through the flow passageway it is consumed creating a lower partial pressure of diatomic molecular oxygen along the chamber. Thus, if the chamber was expanding along the passageway, *i.e.*, volume increasing, the gas may have a lower velocity resulting in a higher pressure at the cathode surface. Accordingly, an expanding cathode passageway may help maintain reaction equilibrium or create a shift that favors the production of ionic oxygen.

At the anode side of a fuel cell the relevant reaction is between the ionic oxygen and a fuel, *e.g.*, $C_3H_8$, $CH_4$, $H_2$, and the like. As the reactants enter the anode chamber they begin to react and form products.

More and more product is formed along the flow path within the flow passageway. The result is that the pressure of the products may be increasing along the flow passageway. Accordingly, if the flow passageway were contracting, *i.e.*, the volume within the chamber was decreasing, the velocity of the gas may increase resulting in a lower pressure of products at the anode surface. The lowered pressure on the product side may help maintain reaction equilibrium or create a shift that favors products.

An additional consideration in selecting an appropriate reduction in volume may be the fuel composition. As shown below, different fuel compositions may result in different volumes of products being formed.

$$C_3H_8 + 10O^{2-} \leftrightarrow 3CO_2 + 4H_2O \qquad (1)$$

$$CH_4 + 3O^{2-} \leftrightarrow CO_2 + 2H_2O \qquad (2)$$

$$H_2 + O^{2-} \leftrightarrow H_2O \qquad (3)$$

Thus for every mole of propane reacted there are seven moles of products. A similar reaction using one mole of methane results in only three moles of products and only one mole of products for one mole of hydrogen fuel. Accordingly, it may be appropriate to consider the fuel composition when determining a change in volume along an anode passageway. Various embodiments are contemplated as suitable for varying the volume of the flow passageways including, but not limited to, alignment of the fuel cell elements, the inclusion of fuel cell spacers, or some combination thereof.

Referring to Figure 1, one embodiment of a fuel cell assembly 100 is shown comprised of fuel cell elements 110 and flow passageways 120, 130 each having an inlets 140, 145 and outlets 150, 155 and spacers 160. The adjacent fuel cell elements 110 form at least in part the boundaries of flow passageways 120, while other flow passageways 130 are defined by both adjacent fuel cell elements 110 and spacers 160. As depicted, the fuel cell elements have a central throughbore 170 that allows communication with flow passageways 120, 130 as a mechanism to remove gas via oubets 150, 155. Altematively, the flow may be a counterflow, *i.e.*, flow passageways 120 have a flow from ports 140, to ports 150, while flow passageways 130 have flow from ports 155 to ports 145 or vica versa depending upon the direction of the graduated volume within the cathode passageway.

The fuel cell elements 110 may be comprised of electrode and electrolyte material. It will be appreciated that the particular electrolyte material used in the embodiments of the invention is not critical to the spirit of the invention. The electrolyte material may be formed from any suitable material, as desired and/or necessitated by a particular end use. Suitable electrolyte materials may include, but are not limited to, cubic fluorite structure electrolytes, doped cubic fluorite electrolytes, proton-exchange polymer electrolytes, proton-exchange ceramic electrolytes, and mixtures thereof. Further, the electrolyte material may be yttria-stabilized zirconia (YSZ), samarium doped-ceria (SDC, $Ce_xSm_yO_{2-\delta}$), gadolinium doped-ceria (GDC, $Ce_xGd_yO_{2-\delta}$), $La_aSr_bGa_cMg_dO_{3-\delta}$ and mixtures thereof.

Likewise, the electrode material used in the embodiments of the invention is not critical to the spirit of the invention. The electrode material may be formed from any suitable material, as desired and/or necessitated by a particular end use. In general, the electrode materials may be comprised of metal(s), ceramic(s) and/or cermet(s). It will be appreciated that the electrode materials may comprise either anode or cathode materials. Examples of suitable anode materials include, but are not limited to, nickel, platinum, Ni-YSZ, Cu-YSZ, Ni-SDC, Ni-GDC, Cu-SDC, Cu-GDC and mixtures thereof. Examples of suitable cathode materials include, but are not limited to, silver, platinum and mixtures thereof; and samarium strontium cobalt oxide (SSCO, $Sm_xSr_yCoO_{3-\delta}$), barium lanthanum cobalt oxide (BLCO, $Ba_xLa_yCoO_{3-\delta}$), gadolinium strontium cobalt oxide (GSCO, $Gd_xSr_yCoO_{3-\delta}$) and mixtures thereof.

As shown in Figure 1, the fuel cell elements 110 may be configured as electrolyte supported elements having an anode layer 112, a cathode layer 116 and an electrolyte layer 114 disposed between the anode 112 and cathode 116 layers. It should be appreciated that this configuration is not critical to the invention and other configurations of fuel cell elements are within the scope of the invention. For example, the fuel cell elements 110 may have an electrode supported configuration, in which the anode is the support and the electrolyte and cathode materials are deposited as thin layers on the anode material. As shown, each of the fuel cell elements 110 have a similar anode/electrolyte/cathode structure or order, but the order of the layers is reversed for each successive element. Thus, the fuel cell elements 110 are stacked in an anode to anode and cathode to cathode arrangement. In this type of arrangement, flow passageways 120 and 130 may become anode passageways 120 and cathode passageways 130.

The fuel cell elements 110 may have any shape. Although not illustrated, the fuel cell elements 110 in Figure 1 are contemplated as having a generally planar disc shape. Planar square, rectangular or other shapes are equally applicable. The shape may be selected as desired and/or necessitated by a particular end use. In addition, depending upon the ultimate shape design selected, the flow passageway inner and outer ports may be located at differing regions of the fuel cell element.

As shown, the spacers 160 may be disposed selectively within one or more flow passageways. Spacers 160 may have any suitable shape such that the spacers may be mounted within the assembly 100 and have an appropriate distribution over the available electrode surface area within a flow passageway. In some embodiments, the shape of the spacers 160 may correspond to the planar shape (regardless of cross sectional shape) of the fuel cell elements 110. In other words, if the fuel cell elements 110 had a planar circular shape then the spacer may also have a planar circular shape. Spacers 160 may be used to adjust the volume within the flow passageway and, thus, may have a graduated region that increases in thickness along the outward flow path within the flow passageways 130. The cross section of the graduated region may resemble a wedge shape, as shown in Figure 1.

In addition, spacers 160 may also have textured surfaces 165, as shown in Figure 1a. The textured surface 165 may simply be irregular or may have some type of designed grooves or ridges. Textured surfaces 165 may disrupt gas flow within the flow passageways and cause increased turbulence, which may increase the probability of the reactant gas stream interacting with the electrode material. In one embodiment of the invention, the textured surfaces may force the gas stream to move in a designed pattern, e.g., spiral or rotational, as it moves from inlet to outlet within a flow passageway. Forced flow may also increase the residence time of the reactant gas within the flow passageways providing an increased probability of the reactant gas stream interacting with the electrode material.

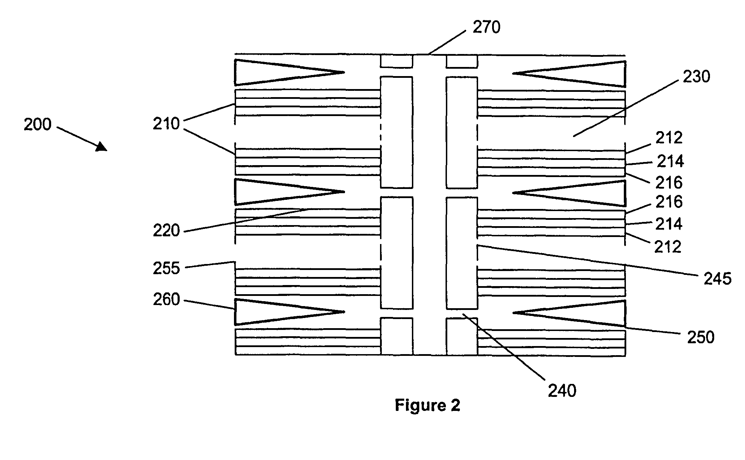

In another embodiment, the graduated regions may be located within the anode passageways. For example, Figure 2 shows a fuel cell assembly 200 is comprised of solid oxide fuel cell elements 210; and flow passageways 220, 230 each having inner ports 240, 245 and outer ports 250, 255 and spacers 260. The adjacent fuel cell elements 210 form at least in part the boundaries of flow passageways 230, while other flow passageways 220 are defined by both adjacent fuel cell elements 210 and spacers 260. As depicted, the fuel cell elements have a central throughbore 270 that allows communication with the flow passageways 220, 230 as either a mechanism to introduce gas via inlets 240, 245.

As shown, fuel cell elements 210 may be configured as electrolyte supported elements having an anode layer 212, a cathode layer 216 and an electrolyte layer 214 disposed between the anode 212 and cathode 216 layers. Each of the fuel cell elements 210 have a similar anode/electrolyte/cathode structure or order, but the order of the layers is reversed for each successive element. Thus, the fuel cell elements 210 are stacked in an anode to anode and cathode to cathode arrangement.

The considerations for the fuel cell assembly 200 are the same as those disclosed in the description above with respect to the fuel cell assembly 100 in Figure 1 (e.g., electrode composition and configuration, spacer composition and configuration, and the like). The difference in fuel cell assembly 200 is placement of the spacers 260 within the anode passageways 220 instead of within the cathode passageways 230 as in assembly 100. In addition, the flow of gas through the flow passageways 220 and 230 flows from ports 240, 245 located near the inner or central region of the fuel cell elements 210 to ports 250, 255 located near the outer or periphery region of the fuel cell elements 210. Inlets 240, 245 feed to a common throughbore 270 as a mechanism to introduce gas from flow passageways 220, 230. As stated with respect to Figure 1, the flow may be a counterflow with respect to the anode passageway 220 and cathode passageways 230, *i.e.*, anode flow from outer to inner region and cathode flow from inner region to outer region or, vice versa depending upon the direction of the graduated volume within the anode passageway.

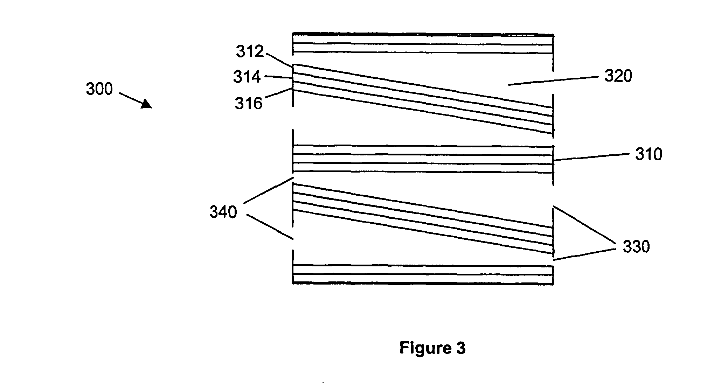

Figure 3 shows another embodiment of a fuel cell assembly 300 having a plurality of fuel cell elements 310 and flow passageways 320 each having an inlet 330 and outlet 340. The fuel cell elements 310 may be configured as electrolyte supported elements having an anode layer 312, a cathode layer 316 and an electrolyte layer 314 disposed between the anode 312 and cathode 316 layers. As with the other various embodiments of the invention, this particular fuel cell element configuration is not critical to the invention and other configurations of fuel cell elements are within the scope of the invention. As shown, the fuel cell elements 310 are stacked in an anode to anode and cathode to cathode arrangement. In this type of arrangement, flow passageways 320 may become anode or cathode chambers.

The fuel cell elements 310 may have any suitable shape, *e.g.*, square, rectangular, triangular or any combination thereof. The shape may be selected as desired and/or necessitated by a particular end use. Although not illustrated, the fuel cell elements 310 in Figure 2 are contemplated as having a planar square or rectangular shape. The adjacent fuel cell elements 310 form at least in part the boundaries of flow passageways 320.

The flow passageways 320, as shown, have a graduated or non-constant cross sectional volume. The graduated cross sectional area of the flow passageways 320 is formed by non-parallel alignment of adjacent fuel cell elements 310. The degree of volume change along the flow passageways 320 may be tailored to correspond to a particular fuel composition or other consideration by changing the alignment of the fuel cell elements 310 with respect to each other.

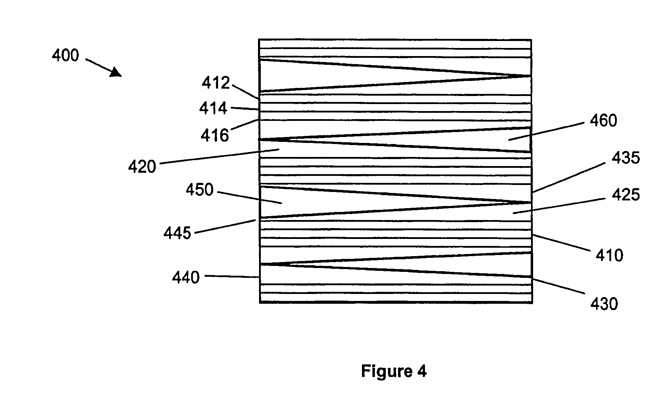

Figure 4 shows another embodiment of a fuel cell assembly 400 having a plurality of fuel cell elements 410, flow passageways 420, 425 each having an inlet 430, 435 and an outlet 440, 445 and spacers 450, 460. The fuel cell elements 410 may be configured as electrolyte supported having an anode layer 412, a cathode layer 416 and an electrolyte layer 414. The adjacent fuel cell elements 410 form at least in part the boundaries of flow passageways 420, 425 along with spacers 450, 460. Spacers 450, 460 have a region of graduated cross sectional area resembling a wedge shape. It should be appreciated that the spacers in 450 and 460 may or may not be identical in shape, cross sectional area or composition. For example the volume change for an anode passageway 425 may require a different change in volume due to any number of factors including, but not limited to, the fuel being used. It should also be appreciated that the flow may be counterflow with respect to the flow passageways 420 and 425 provided that the flow chambers expand along the flow path regardless of direction of flow.

Other embodiments of the invention comprise methods of using the various embodiments described or suggested above. One embodiment is directed toward a method to increase fuel cell efficiency. The method comprises the steps of accessing a fuel cell stack comprising fuel cell elements, each element comprising an anode, a cathode and an electrolyte disposed between the anode and cathode. The fuel cell elements may define at least in part flow passageways between the elements. The flow passageways should have a region of graduated cross sectional area along the flow path defined by the flow passageway. The region of graduated cross sectional area may be accomplished within the flow passageway by alignment of the fuel cell elements engaged in an assembly and/or using spacers. The spacers will be disposed between adjacent fuel cell elements and have at least region of graduated thickness.

A gas stream is then passed through a flow passageway allowing at least a portion of the gas to contact with anode or cathode material, depending upon the passageway. For example, an oxygen containing gas may pass over a cathode and a fuel gas over an anode. The gas will pass through the passageway and the region of graduated cross sectional area having an affect on the velocity and pressure in that region. The volume adjustment can be tailored to a particular fuel as described earlier, to compensate for the inherent structure of the fuel cell elements and arrangement of the stack, and/or to compensate for the consumption of reactant gas or production of products along the flow passageway. Thus, the volume of the passageway is controlled and the reaction equilibrium, electrocatalyst contact time and/or reactant pressure may be optimized.

Other embodiments of this present invention may include fuel cell systems that combine a mixture of the fuel and oxidizer into the fuel cell chamber. This is commonly called a single-chamber design, where the selectivibes of the respective anode and cathode only allow the appropriate oxidation and reducing reactions to take place, respectively. In this design the anode and cathode can be disposed on opposite sides and/or the same side of the electrolyte. The volume of the passageways can be adjusted using the methods described above, although the optimized values of the velocity of the gases may be slightly different due to the conversion of the respective fuel and oxidizer to products and/or by-products in the same flow passage.

The above discussion is meant to be illustrative of the prindptes and various embodiments of the present invention. Numerous variations and modifications will become apparent to those skilled in the art once the above disclosure is fully appreciated. For example, although the flow passageways are described as graduated by a particular alignment of the fuel cell elements or the addition of spacers, other embodiments that perform the same function are clearly within the scope of the invention. One such altemative may comprise fuel cell elements that are simply manufactured with non-uniform thicknesses such that when engaged in a stack the flow passageways between the elements have a graduated volume along the flow path. It is intended that the following claims be interpreted to embrace all such variations and modifications.

## Claims

1. A fuel cell assembly (100), comprising:

   one or more fuel cell elements (110); and

   one or more flow passageways (120, 130) from an inlet (140, 145) to an outlet (150, 155) between adjacent fuel cell elements (110);

   wherein at least one flow passageway has a cross sectional area that is graduated, wherein the flow passageway (120, 130) are defined in part by a spacer (160) having a textured surface (165).

2. The assembly according to claim 1 wherein the fuel cell elements (110) have a planar disc shape.

3. The assembly according to claim 1 wherein the fuel cell elements (110) have either a square or rectangular shape.

4. The assembly according to claim 1 further comprising spacers (160), wherein the flow passageways (120, 130) are defined in part by the spacers.

5. The assembly according to claim 4 wherein the spacers (160) have a wedge shaped region.

6. The assembly according to any one of claims 1 to 5, wherein the at least one flow passageway is configured to feed gas introduced into the inlet to the first and the second fuel cell element.

7. The assembly according to any one of claims 1 to 6, wherein the cross sectional area increases from the inlet towards the outlet.

8. The assembly according to any one of claims 1 to 6, wherein the cross sectional area decreases from the inlet towards the outlet.

9. The assembly according to any one of claims 1 to 8, the assembly comprising first and second flow passageways (120, 130) each having a cross sectional area that is graduated, wherein the first flow passageway (120, 130) is adapted for feeding gas to electrodes of the fuel cell elements and the second flow passageway (120, 130) is adapted for feeding gas to cathodes of the fuel cell elements.

10. A method to increase fuel cell efficiency, comprising:

    passing a gas stream through a flow passageway (130) having a region of graduated cross sectional area along the flow passageway (130), wherein the graduated cross sectional area is formed at least in part by a spacer (160) having a textured surface (165), the spacer (160) located between adjacent fuel cell elements (110), and wherein the pressure along the flow passageway (130) is controlled and the reaction equilibrium is maintained.

11. The method according to claim 10 wherein the spacer is selected at least in part based on a fuel composition.

Figure 1

165

160

Figure 1A

Figure 2

Figure 3

Figure 4